# NEUE EUROPÄISCHE PATENTSCHRIFT

(11) **EP 0 403 428 B2**
(45) Veröffentlichungstag und Bekanntmachung des Hinweises auf die Entscheidung über den Einspruch: **31.01.2001**
(45) Hinweis auf die Patenterteilung: 20.10.1993
(21) Anmeldenummer: 90810402.9
(22) Anmeldetag: 01.06.1990
(51) Int. Cl.: B23Q 16/04, B23Q 7/14

(54) **Vorrichtung zum Positionsdefinierten Aufspannen eines Werkstückes auf einem Bearbeitungstisch**
Device for induced clamping of a workpiece on a processing table
Dispositif pour l'abloquage indixé d'une pièce sur une table d'usinage

(30) Priorität: 10.06.1989 DE 3919077
(43) Veröffentlichungstag der Anmeldung: 19.12.1990
(73) Patentinhaber: Erowa AG, CH-5734 Reinach (CH)
(72) Erfinder: Schneider, Rudolf, CH-6362 Stansstad (CH)
(74) Vertreter: Rottmann, Maximilian R.

(56) Entgegenhaltungen:
- EP-A- 0 255 042
- EP-B- 0 111 092
- WO-A-89/03276
- DE-A- 3 115 586
- DE-C- 3 729 601
- GB-A- 1 094 067
- GB-A- 2 033 263
- MACHINERY AND PRODUCTION ENGINEERING. vol. 144, no. 3699, August 1986, HORTONKIRBY, KENT, GB Seite 45 "Erowa s clamping system"
- Nils Abramson, The Making and Evaluation of Holograms, Academic Press 1981, Page 322-324
- ITS 40 Integriertes Elektroden-Spannsystem, Erowa, 01.12.85

## Beschreibung

Die vorliegende Erfindung bezieht sich auf eine Vorrichtung zum positionsdefinierten Aufspannen eines Werkstücks auf einem Bearbeitungstisch, wie etwa aus der DE-C1-37 29 601 bekannt.

Unter dem Begriff "positionsdefiniertes Aufspannen" wird hier im weitesten Sinn verstanden, dass ein Gegenstand, namentlich ein zu bearbeitendes Werkstück, in genau bekannter, definierter Lage innerhalb einer Bearbeitungsvorrichtung befestigt wird. Im besonderen soll in erster Linie eine genau definierte Lage des Gegenstandes in zwei senkrecht zueinander liegenden Richtungen, der X- und derY-Achse, sowie bezüglich einer Verdrehung in der X/Y-Ebene erreicht werden. Schliesslich soll, bei einer Weiterbildung des Erfindungsgegenstandes, auch eine an sich weniger kritische, nichtsdestoweniger aber ebenso wichtige, definierte Positionierung in der Z-Achse gewährleistet sein.

Zum Einspannen von kleinen Werkstücken sind Vorrichtungen bekannt, die im allgemeinen ebenfalls relativ geringe Abmessungen besitzen, umfassend eine Werkstückaufnahme, an welcher ein Werkstückträger befestigt werden kann. Für die Positionierung sorgen dabei vorstehende Zentrierzapfen an der Aufnahme und korrespondierend angeordnete Zentrieröffnungen am Träger, in welche die Zentrierzapfen eingreifen. Wenn man einmal von einer Positionierung in Erstreckungsrichtung der Z-Achse absieht, genügt es dabei, zwei jeweils miteinander zusammenarbeitende Zapfen/Öffnungs-Paare vorzusehen, wobei je ein Paar die Positionsbestimmung in X- bzw. Y-Richtung und das Zusammenwirken der beiden Paare die Winkelposition um die Z-Achse festlegen.

Eine wesentliche Voraussetzung bei solchen bekannten Aufspannvorrichtungen ist, dass die Zentrierzapfen einerseits und die Zentrieröffnungen andererseits bezüglich ihrer relativen Lage zueinander sehr präzise angeordnet sind, damit eine einwandfreie Zusammenarbeit von Zapfen und Öffnungen und damit die gewünschte Positionierung des Trägers in Bezug auf die (in ihrer Lage bekannten) Aufnahme gewährleistet ist. Dies bringt einen hohen Fertigungsaufwand und damit grosse Kosten mit sich, insbesondere, wenn aussergewöhnlich hohe Anforderungen an die Positioniergenauigkeit gestellt werden, wie es z.B. im Fall der elektroerosiven Bearbeitung von Werkstücken der Fall ist. Ausserdem ist eine solche Anordnung oft geometrisch überbestimmt, namentlich wenn, wie in den meisten Fällen, konische Zentrierzapfen Verwendung finden, da hier beide Zapfen/Öffnungs-Paare theoretisch unabhängig voneinander die Lage in X/Y-Richtung festlegen.

Besonders gravierend wirken sich diese Nachteile aus, wenn verhältnismässig grosse Werkstücke aufgespannt werden sollen. Im Interesse einer stabilen Lage sind die einzelnen Zentrierzapfen bzw. Zentrieröffnungen möglichst weit voneinander entfernt anzuordnen. Dabei machen sich bereits im Bereich von 20 - 40 cm Distanz zwischen den einzelnen Zapfen/Öffnungs-Paaren durch thermische Ausdehnung bzw. Kontraktion hervorgerufene Abweichungen bemerkbar, die einen einwandfreien Sitz des einen oder anderen Zentrierzapfens in der zugeordneten Zentrieröffnung beeinträchtigen. Die Folge davon ist, dass die namentlich im Werkzeugbau geforderte, äusserst hohe Positionsgenauigkeit nicht mehr gewährleistet ist.

Ein weiteres Problem stellt sich dann, wenn auf ein und derselben Aufnahme verschiedene Träger befestigt werden sollen, die möglicherweise aus unterschiedlichen Herstellungs-Serien stammen und deshalb, wenn auch kleine, so doch bei äusserst hohen Präzisionsanforderungen spürbare Dimensionsabweichungen besitzen. Aus den zuvor genannten Gründen ist eine exakte Lagepräzision wiederum nicht gewährleistet.

Aus der GB-A- 2 033 263 ist eine Vorrichtung zum positionsdefinierten Aufspannen eines Werkstücks auf einem Bearbeitungstisch bekannt, mit einer Werkstückaufnahme, auf welcher das Werkstück lösbar befestigt wird und welche mit Zentrieröffnungen versehen ist, die mit korrespondierend auf dem Bearbeitungstisch angeordneten, über diesen vorstehenden Zentrierzapfen zusammenwirken. Die dort beschriebene Vorrichtung ist mit vier im Bereich der Ecken der aufzuspannenden Palette gelegenen, V-förmigen Nuten (V-grooves 70) versehen, die sinngemäss den Zentrieröffnungen des Anmeldungsgegenstandes entsprechen, welche Nuten mit vorstehenden Zapfen (V-blocks 23, 24, 26, 28) zusammenwirken, um die Palette in X- und Y-Richtung (und sogar auch in Z-Richtung) zu positionieren. Damit ist eine Gruppe von vier weit auseinanderliegenden Öffnungs-Zapfen-Paaren vorhanden, welche die gesamte Zentrierfunktion übernimmt. Es leuchtet ein, dass die Zentriergenauigkeit der Palette auf dem Maschinentisch ausschliesslich von der Bearbeitungsgenauigkeit und der aktuellen Lage der "V-blocks" und der "V-grooves" abhängt. Die Anordnung ist geometrisch überbestimmt und selbst bei kleinsten Abweichungen der Lage der V-förmigen Nuten in der Palette wird sich nie die exakt gleiche Position einstellen, wenn nacheinander eine Anzahl von Paletten z.B. aus unterschiedlichen Herstellungsserien oder mit unterschiedlichen Temperaturen aufgespannt werden.

Aus der DE 31 15 586 A1 ist eine Palettenwechsel- und Zentriervorrichtung für eine Werkzeugmaschine bekannt geworden, die eine Zufuhrbahn umfasst, auf der die mit dem Werkstück beladenen Paletten zu einer Palettenaufnahme- und Werkstückbearbeitungsstation gelangen. Wenn die Palette dort angelangt ist, wird die Station abgesenkt, bis die Palette einerseits auf der Oberfläche von Z-Achsen-Zentrierstiften aufliegt, die jedoch keine Zentrierfunktion in X-, Y- oder Winkelrichtung ausüben. Beim Absenken der Station greifen andererseits konisch ausgebildete Oberkanten von Zentrierstiften in entsprechend konisch ausgebildete Büchsen ein. Die Büchsen sind in achsialer Richtung federnd, in radialer Richtung jedoch starr gelagert. Damit soll eine "genaue Ausfluchtung der Palette auf dem Festlegungsstift in radialer Richtung" erreicht werden.

Mit dieser Anordnung ist es nicht möglich, eine genaue Zentrierung in X/Y-Richtung und bezüglich der Winkellage zu erreichen, namentlich wenn die Achsabstände der Zentrierstifte einerseits und der Büchsen andererseits nicht exakt übereinstimmen. Wenn nämlich der Abstand zwischen den Zentrierstiften einerseits und den Büchsen andererseits nicht ganz genau übereinstimmt, ist die Lage der Palette undefiniert, da je nach Ausgangslage der Palette vor dem Eingreifen der Stifte in die Büchsen entweder das eine Stift-Büchsen-Paar oder das andere definiert ineinandergreift; dies resultiert aber zwangsläufig in zwei unterschiedlichen Positionen der Palette, was erfindungsgemäss eben vermieden werden soll.

Aus der DE-C1-37 29 601 ist eine Vorrichtung zum positionsdefinierten Aufspannen eines Werkstücks oder Werkzeugs bekannt geworden, Sie weist eine Werkstück- bzw. Werkzeugaufnahme auf, die mit zwei vorstehenden Zentrierzapfen versehen ist, die in zwei korrespondierend an einem Werkstück- bzw. Werkzeugträger angeordneten Zentrieröffnungen einzugreifen bestimmt sind. Eine der Zentrieröffnungen des Werkstück- bzw. Werkzeugträgers ist mit Bezug auf die andere, im Abstand davon angeordnete Zentrieröffnung in einer sich im wesentlichen entlang der Verbindungslinie zwischen den beiden Zentrieröffnungen erstreckenden Richtung beweglich, senkrecht dazu jedoch starr angeordnet. Diese Vorrichtung hat sich im Prinzip bewährt, besitzt jedoch den Nachteil, dass sie in folge der zu erzielenden Beweglichkeit der einen Zentrieröffnung verhältnismässig aufwendig ist.

Es ist die Aufgabe der vorliegenden Erfindung die vorstehend genannten Nachteile zu vermeiden und eine Vorrichtung der oben genannten Art derart weiterzubilden, dass auch bei verminderter Präzision bei der Herstellung der Aufnahme bzw. des Trägers, namentlich bezüglich des gegenseitigen Abstandes der Zentrierzapfen bzw. Zentrieröffnungen, sowie unter dem Einfluss thermisch bedingter Abmessungsänderungen von Träger und/oder Aufnahme eine nachmals gesteigerte, hohe Positioniergenauigkeit des Trägers auf der Aufnahme erreicht bzw. aufrechterhalten wird.

Diese Aufgabe wird durch die im Patentanspruch 1 angegebenen Massnahmen gelöst. Insbesondere ist damit gewährleistet, dass z.B. im Fall von zwei Gruppen von Zentrieröffnungen und Zentrierzapfen die eine Gruppe die Aufgabe der X/Y-Positionierung und die Festlegung der ungefähren Winkellage um die Z-Achse übernimmt und damit die Referenz für die Z-Achse genau festlegt, währenddem die andere Gruppe die Werkzeugaufnahme bezüglich ihrer Verdrehungs-Ausrichtung um die Z-Achse herum exakt positioniert. Der gegenseitige Abstand zwischen den beiden Zentrieröffnungen/Zentrierzapfen-Gruppen wird somit dadurch unkritisch, dass die Distanz zwischen den Zentrierzapfen zweier Gruppen und die Distanz zwischen den Zentrieröffnungen dieser beiden Gruppen nicht exakt übereinstimmen muss. Als Folge davon werden Herstellungstoleranzen, thermische Dimensionsänderungen und dgl. aufgefangen.

Weiterbildungen des Erfindungsgegenstandes und bevorzugte Ausführungsformen sind in den abhängigen Ansprüchen 2-16 beschrieben.

Im folgenden wird ein Ausführungsbeispiel der erfindungsgemässen Vorrichtung, unter Bezugnahme auf die beiliegenden Zeichnungen, näher erläutert In den Zeichnungen zeigen:
- Fig. 1: eine Draufsicht auf einen Arbeitstisch einer Werkstückbearbeitungsmaschine mit vier Gruppen von Zentrierzapfen;
- Fig. 2: eine Ansicht eines ersten Ausführungsbeispiels einer Werkstückaufnahme von unten mit vier Gruppen von Zentrieröffnungen;
- Fig. 2a: eine Ansicht eines zweiten Ausführungsbeispiels einer Werkstückaufnahme von unten mit zwei Gruppen von Zentrieröffnungen;

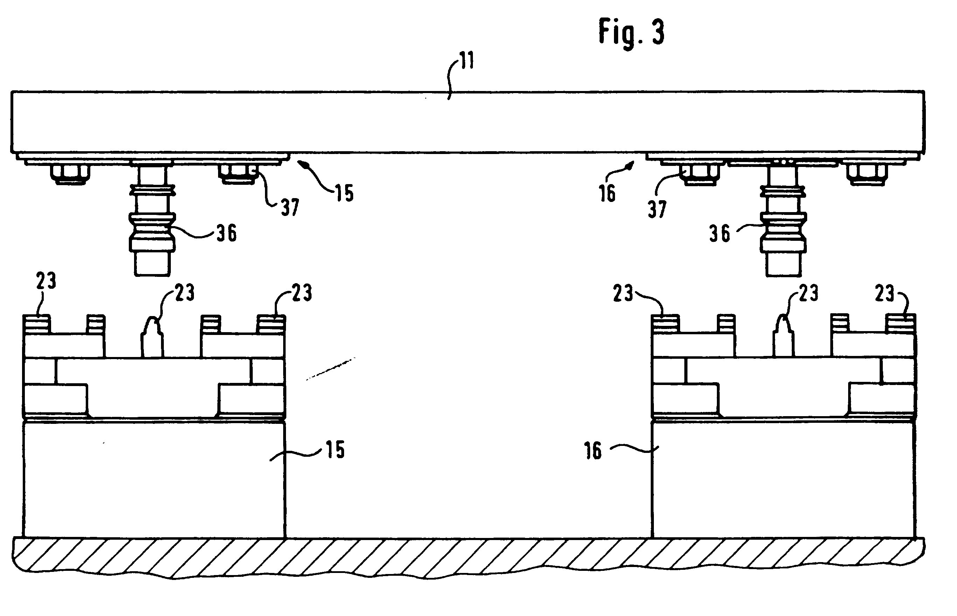

- Fig. 3: eine teilweise geschnittene Seitenansicht des Arbeitstisches und der Werkstückaufnahme in Richtung der Pfeile A in Fig. 1 und 2;
- Fig. 4: eine Ansicht eines Tragkörpers mit vier äusseren und vier inneren Zentrierstifen;
- Fig. 5: eine Seitenansicht des Tragkörpers von Fig. 4;
- Fig. 6: eine Teilansicht einer Werkzeugaufnahme mit zwei Gruppen von Zentrieröffnungen von unten;
- Fig. 7: einen Schnitt entlang der Linie VII-VII in Fig. 6;
- Fig. 8: einen vergrösserten Teilschnitt durch einen Zentrierzapfen;
- Fig. 9: eine Ansicht der der Werkzeugaufnahme zugewandten Seite einer Zentrierplatte;
- Fig. 10: einen vergrösserten Teilschnitt durch eine Zentrierplatte und einen Zentrierzapfen, vor dem Eingreifen des Zentrierzapfens; und
- Fig. 11: einen Schnitt wie in Fig. 10, aber nach dem Eingreifen des Zentrierzapfens.

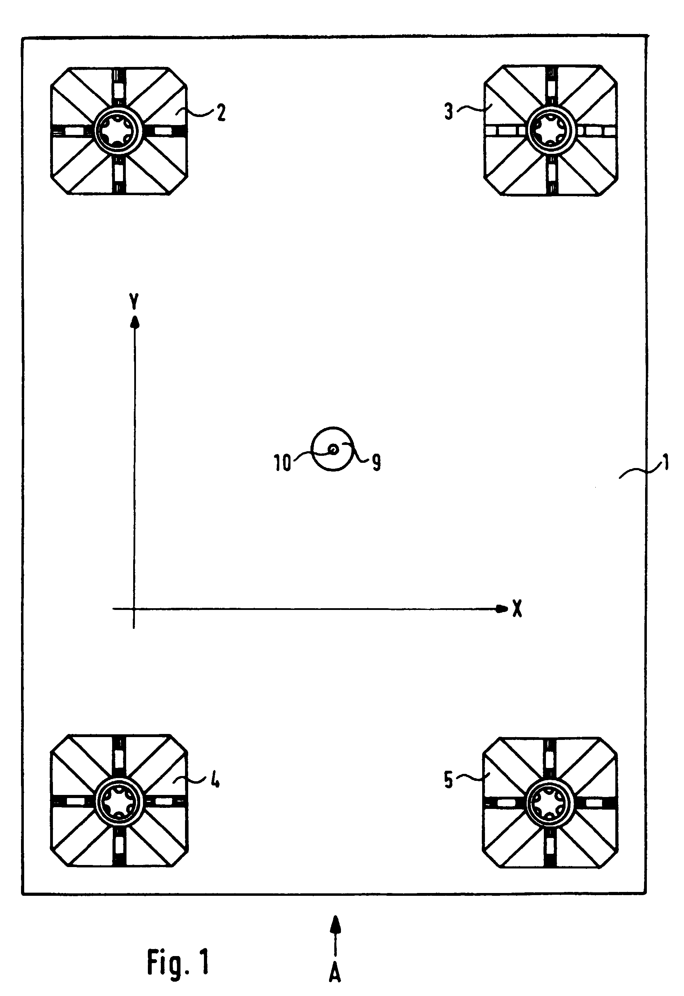

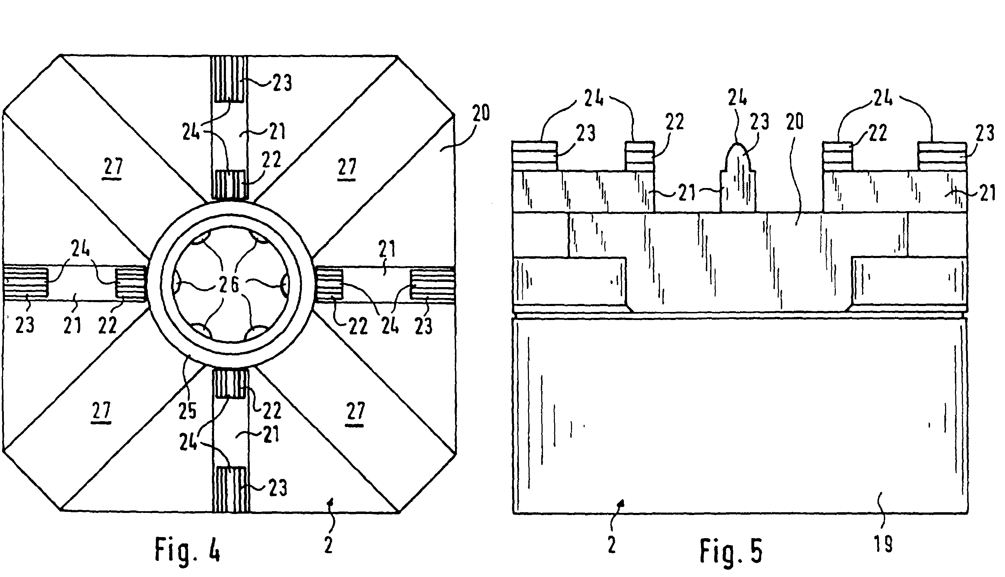

In Fig. 1 ist schematisch der Arbeitstisch 1 einer Werkzeugmaschine dargestellt Auf der Oberfläche des Arbeitstisches 1 sind vier Tragkörper 2, 3, 4 und 5 angeordnet, die je mit mehreren Zentrierzapfen versehen sind. Auf die nähere Ausbildung der Tragkörper 2-5 wird nachstehend im Zusammenhang mit Fig. 4 und 5 noch detailliert eingegangen werden. Zweckmässigerweise sind alle vier Tragkörper 2-5 identisch ausgebildet.

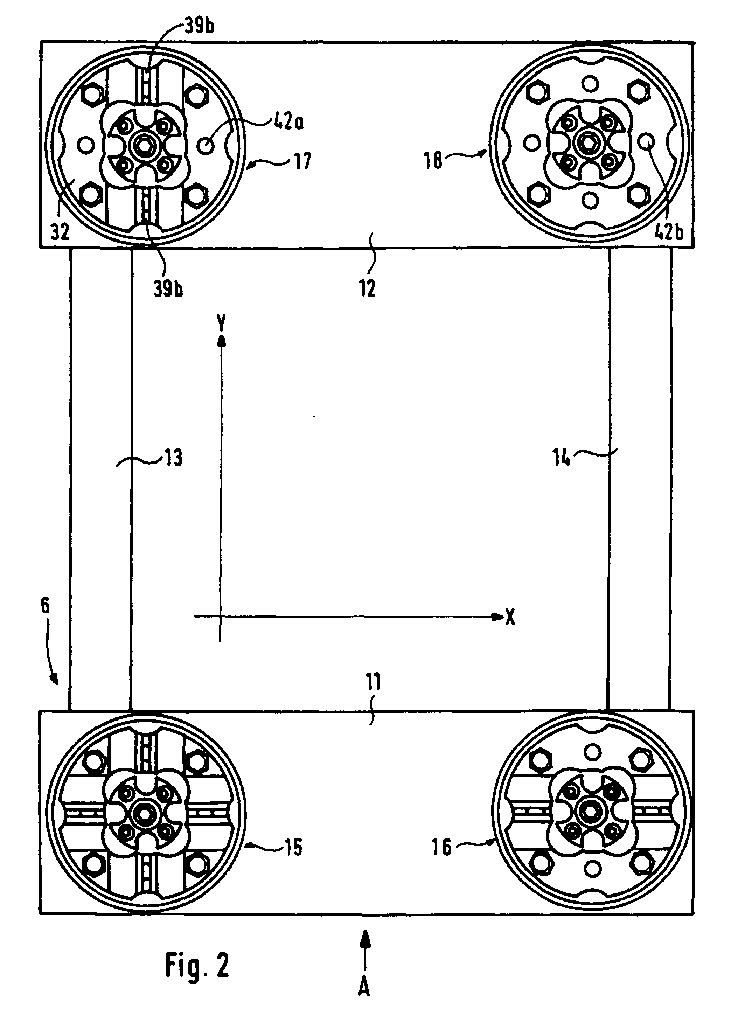

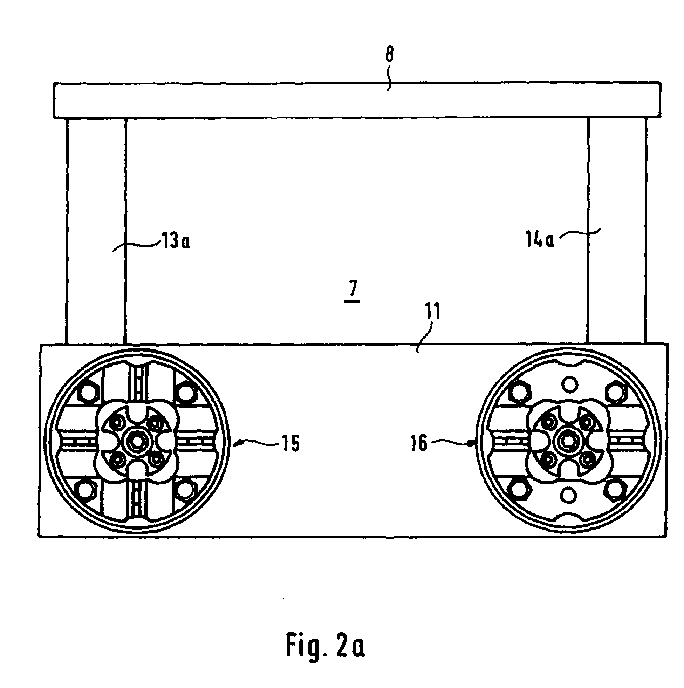

In Fig. 2 ist schematisch ein Werkstückaufnahme-Rahmen 6 in einer Ansicht von unten dargestellt, d.h. mit Blick auf die dem Arbeitstisch zugewandte Seite. Der Rahmen 6 ist im Bereich seiner vier Ecken mit je einer Gruppe von Zentrieröffnungen versehen; auf deren nähere Ausbildung wird ebenfalls im folgenden noch detailliert eingegangen.

In Fig. 2a ist schematisch ein ähnlicher Werkstückaufnahme-Rahmen 7 wie in Fig. 2, in entsprechender Ansicht, dargestellt, der aber lediglich mit zwei Gruppen von Zentrieröffnungen versehen ist. Der Rahmen 7 kann auf dem gleichen Arbeitstisch 1 verwendet werden, wobei dann lediglich zwei Tragkörper, z.B. die beiden Tragkörper 4 und 5, benutzt werden. Wenn der Rahmen 7 auf dem Arbeitstisch 1 befestigt ist, liegt der Querholm 8 des Rahmens 7 auf einem Stützelement 9 des Arbeitstisches auf, welches zweckmässigerweise mit einer Druckluft-Auslassöffnungen 10 ausgerüstet ist, um beim Auflegen des Rahmen 7 etwaigen Schmutz zwischen Querholm 8 und Oberfläche des Stützelementes 9 wegzublasen.

Gemäss Fig. 2 besteht der Werkstückaufnahme-Rahmen 6 aus zwei Querholmen 11 und 12, die mittels zweier Längsholme 13 und 14 miteinander verbunden sind. An den beiden Längsholmen 13 und 14 können Aufnahmeorgane für die zu bearbeitenden Werkstücke befestigt werden (nicht dargestellt); auf deren Ausbildung braucht im Rahmen dieser Beschreibung nicht eingegangen zu werden. Die beiden Querholme 11 und 12 sind mit je zwei Zentrierorganen 15 und 16 bzw. 17 und 18 versehen, deren Aufbau nachstehend noch genauer beschrieben wird. Der Rahmen 7 gemäss Fig. 2a besitzt den gleichen Querholm 11 mit den beiden Zentrierorganen 15 und 16, zwei kürzere Längsholme 13a und 14a sowie den bereits erwähnten Querholm 8, der keine Zentrierorgane aufweist.

Während der Rahmen 6 gemäss Fig. 2 für grössere Werkstücke bzw eine Vielzahl von kleineren Werkstücken Verwendung findet und infolge seiner Abmessungen im Bereich seiner vier Ecken auf dem Arbeitstisch 1 festgehalten wird, ist der Rahmen 7 gemäss Fig. 2a für kleinere Werkstücke bzw. eine geringe Anzahl kleiner Werkstücke geeignet; demzufolge reicht eine Befestigung an zwei Orten aus und der Querholm 8 kann nur lose auf dem Stützelement 9 aufliegen.

In Fig. 4 ist ein Tragkörper 2 in einer Ansicht von oben dargestellt, während in Fig. 5 der gleiche Tragkörper in einer Seitenansicht zu sehen ist. Der Tragkörper 2 besitzt einen zylindrischen Unterteil 19 und einen im wesentlichen quadratischen Oberteil 20, dessen vier Ecken abgeschrägt sind. Auf der Oberfläche des Oberteils 20 sind vier abstehende Leisten 21 angeformt, die entlang der beiden Mittellinien des Quadrates verlaufen. Auf der Oberfläche der Leisten 21 wiederum sind die eigentlichen Zentrierzapfen angeformt. Beim dargestellten Ausführungsbeispiel tragen die Leisten 21 vier innere Zentrierzapfen 22 und vier äussere Zentrierzapfen 23. Die Zentren der vier inneren, etwas schmaleren Zentrierzapfen 22 liegen auf einem Kreis kleineren Durchmessers, und die Zentren der vier äusseren, etwas breiteren Zentrierzapfen 23 liegen auf einem Kreis grösseren Durchmessers. Die Zentrierzapfen 22 und 23 sind generell keilförmig ausgebildet und die Anordnung ist so getroffen, dass die freien Keilkanten 24 einander gegenüber liegender Zentrierzapfen je auf einer Linie liegen, wobei sich die beiden gedachten Linien rechtwinklig schneiden.

Im Zentrum des Tragkörpers 2 ist ein Kugelspannfutter 25 mit federbelasteten, pneumatisch betätigbaren Spannkugeln 26 vorgesehen, das zur Aufnahme eines Zugbolzens dient. Solche Kugelspannfutter sind an sich bekannt und brauchen hier nicht erörtert zu werden.

Vier diagonal verlaufende Oberflächenbereiche 27 des Tragkörper-Oberteils 20 sind exakt plangeschliffen und dienen als Auflagefläche für Distanzbolzen, die Teil der Zentrierorgane 15-18 des Werkstückaufnahme-Rahmens 6 bzw. 7 bilden.

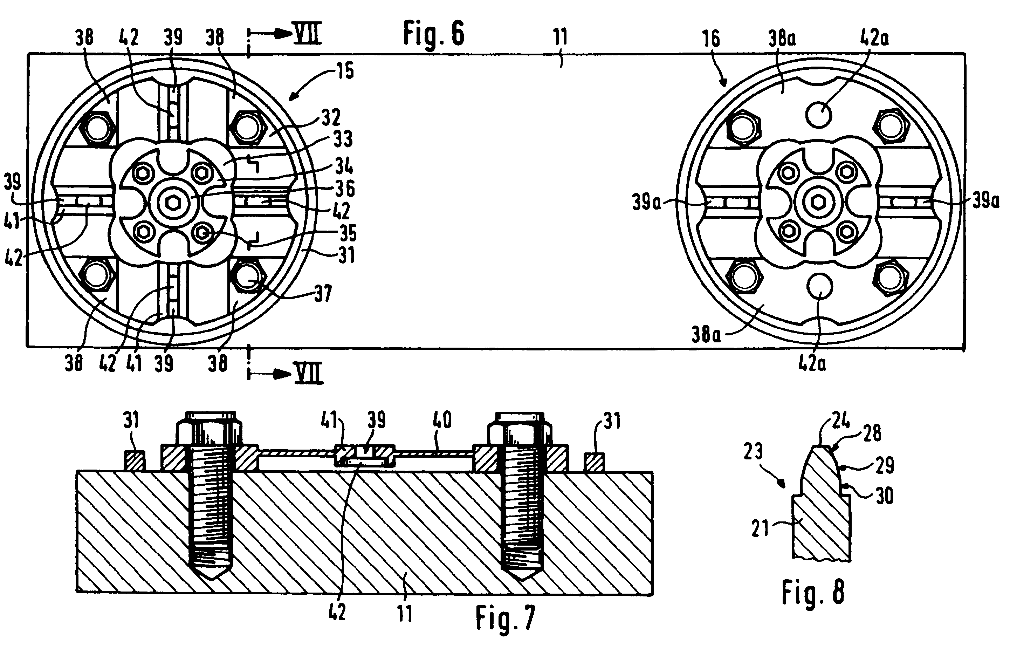

In Fig. 8 ist ein Teilschnitt durch einen Zentrierzapfen 23 dargestellt; die Zentrierzapfen 22 haben denselben Querschnitt. Der an der Leiste 21 angeformte Zentrierzapfen 23 hat symmetrisch zueinander geneigte Seitenflächen: An einen zur Leiste 21 benachbarten Bereich 30 mit parallelen Seitenflächen schliesst sich ein Bereich 29 mit schwächerer Neigung an, der in einen Kopfbereich 28 mit stärkerer Neigung übergeht. Wie noch zu erläutern sein wird, arbeiten die Zentrierzapfen 23 mit Zentrierschlitzen zusammen. Der stärker geneigte Kopfbereich 28 dient dazu, das Einführen der Zentrierzapfen in die Schlitze zu erleichtern, während die schwächer geneigten Bereiche 29 die eigentliche Zentrierfunktion ausüben.

Der Aufbau der Zentrierorgane 15 und 16 ist aus den Fig. 6, 7 und 9 ersichtlich. Diese Figuren zeigen jeweils eine Draufsicht, einen Teilschnitt entlang der Linie VII-VII in Fig. 6 und eine Ansicht der Zentrierplatte 32 von der Seite her, die dem Querholm 11 zugewandt ist.

Auf dem Querholm 11 ist für jedes Zentrierorgan 15 und 16 ein kreisförmiger, vorstehender Rand 31 angebracht, der als Anlage für eine (nicht dargestellte) Schmutz- und Feuchtigkeits-Schutzhaube dient. Innerhalb des Randes 31 des Zentrierorgans 15 ist eine generell kreisförmige Zentrierplatte 32 befestigt, die eine zentrale Öffnung 33 besitzt. Eine Zugbolzenaufnahme 34 durchdringt die Öffnung 33 und ist z.B. mittels Schrauben 35 auf dem Querholm 11 befestigt. Die Aufnahme 34 trägt einen senkrecht abstehenden Zugbolzen 36, welcher derart ausgebildet ist, dass er in das Kugelspannfutter 25 der Tragkörper 2-5 passt.

Die Zentrierplatte 32 ist mit vier Schrauben 37 am Querholm befestigt; die Schrauben 37 dienen gleichzeitig als Distanzbolzen und liegen mit ihrer Oberfläche auf den plangeschliffenen Oberflächenbereichen 27 der Tragkörper 2-5 auf, wenn der Werkstückaufnahme-Rahmen 6 auf dem Arbeitstisch 1 befestigt ist. Sie bestimmen somit die Position des Rahmens 6 und damit des daran befestigten Werkstückes in Z-Richtung. An den Stellen 38, wo die Zentrierplatte 32 mit dem Querholm 11 verschraubt ist, ist diese etwas dicker ausgebildet, wie dies deutlich aus Fig. 7 hervorgeht.

Die verdickten Bereiche 38 der Zentrierplatte 32 sind im Fall des Zentrierorgans 15 mittels dünnen Stegen 40 miteinander verbunden. Alle Stege 40 weisen einen verdickten, zentralen Abschnitt 41 auf, der mit einem Zentrierschlitz 39 versehen ist. Die Dicke des zentralen Abschnittes 41 ist etwas geringer als die Dicke der verdickten Bereiche 38, so dass die zentralen Abschnitte 41 nicht auf der Oberfläche des Querholmes 11 aufliegen; dies ist in Fig. 7 deutlich zu sehen. Je zwei gegenüberliegende Zentrierschlitze 39 liegen auf einer geraden Linie; diese beiden geraden Linie schneiden sich rechtwinklig. Die Zentrierschlitze 39 erstrecken sich über die ganze Breite der Stege 40, und die Tiefe der Zentrierschlitze 39 beträgt etwa 50-70% der Dicke der zentralen Abschnitte 41. Schliesslich sind die zentralen Abschnitte 41 von der Unterseite der Zentrierplatte 32 her je mit einer Sackbohrung 42 versehen, deren Lage im Beispielsfall der Lage der äusseren Zentrierzapfen 23 der Tragkörper2-5 entspricht und deren Durchmesser etwas grösser ist als die grösste Abmessung der Zentrierzapfen 23, in einem Schnitt parallel zur Oberfläche des Oberteils 20 gesehen. Die Breite der Zentrierschlitze 39 entspricht etwa der Breite der Zentrierzapfen 23, in der Mitte des schwächer geneigten Bereichs 29 gemessen.

Durch die gewählte Ausbildung der Zentrierplatte 32 mit den dünnen Stegen 41 sind die zentralen Abschnitte 41 mit den Zentrierschlitzen 39 in Axialrichtung elastisch nachgiebig, in Umfangsrichtung, d.h. innerhalb der Ebene der Zentrierplatte 32 jedoch absolut starr. Die Höhe der Zentrierzapfen 23 ist dabei so bemessen, dass diese beim Eingriff in die Zentrierschlitze 39 die zentralen Abschnitte 41 um einen geringen Betrag gegen den Querholm 11 hin verdrängen. Diese Verschiebung ist derart gering, dass die Stabilität in Umfangsrichtung nicht beeinträchtigt wird.

Das Zentrierorgan 16 ist im Prinzip genau gleich aufgebaut, mit folgenden Unterschieden:

Es sind nur zwei einander gegenüberliegende Zentrierschlitze 39a vorgesehen, die in der Verlängerung der geraden Linie durch diejenigen beiden Zentrierschlitze 39 des Zentrierorgans 16 liegen, welche in der Zeichnung Fig. 6 waagrecht verlaufen, d.h. in Erstreckungsrichtung des Querholms 11. Folglich fallen beim Zentrierorgan 16 die Stege 40 und der verdickte, zentrale Abschnitt 41 weg; vielmehr sind die beiden in Fig. 6 oberen sowie die beiden unteren verdickten Bereiche 38 der Zentrierplatte 32 durchgehend zu einem verdickten Bereich 38a miteinander verbunden. Die Bohrung 42a schliesslich ist, im Gegensatz zu den Sackbohrungen 42 in der Zentrierplatte 32 des Zentrierorgans 15, durchgehend.

Das Zentrierorgan 17 (Fig. 2) ist identisch mit dem Zentrierorgan 16, weist also ebenfalls nur zwei Zentrierschlitze 39a auf. Hingegen ist die Zentrierplatte 32 des Zentrierorgans 17 gegenüber derjenigen des Zentrierorgans 16 um 90° verdreht eingebaut, so dass die Zentrierschlitze 39a des Zentrierorgans 17 in Längserstreckung des Längsholms 13 verlaufen.

Die Zentrierplatte 32 des Zentrierorgans 18 schliesslich besitzt überhaupt keine Zentrierschlitze, sondern nur vier bezüglich der Lage mit den Zentrierzapfen 23 korrespondierende, durchgehende Bohrungen 42b. Im übrigen ist der Aufbau gleich wie derjenige der restlichen Zentrierorgane.

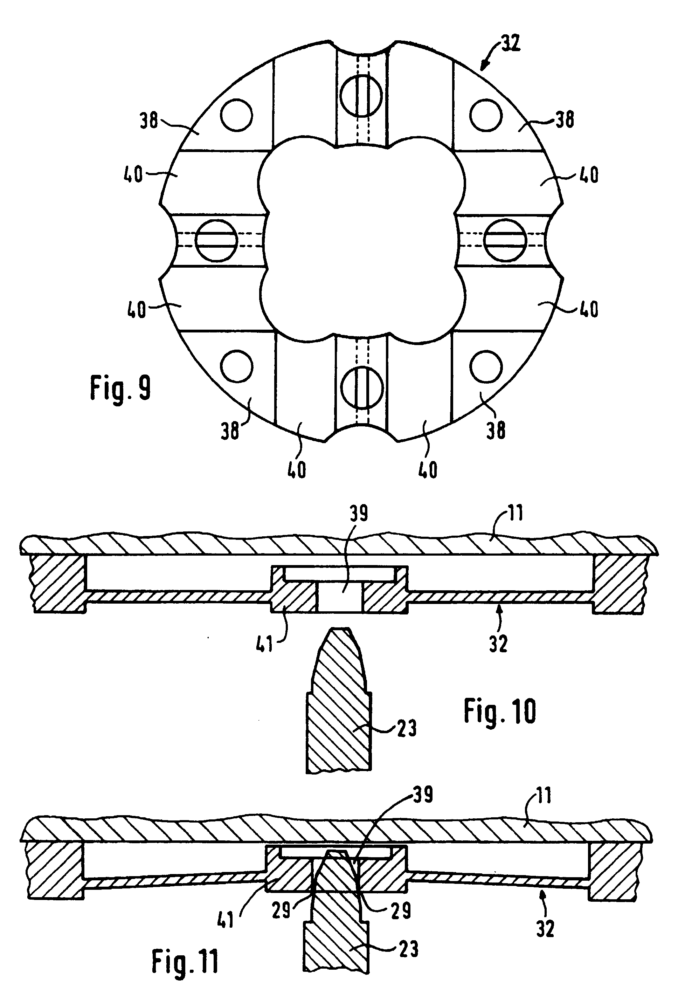

In den Fig. 10 und 11 ist im Teilschnitt die Situation vor und nach dem Aufsetzen und Spannen des Werkstückaufnahme-Rahmens 6 auf den mit den Tragkörpern 2-5 ausgerüsteten Arbeitstisch 1 dargestellt. In Fig. 10 ist die Zentrierplatte 32 in entspannter Ruhelage und der Zentrierzapfen 23 ist kurz vor dem Eindringen in den Zentrierschlitz 39. In der Situation gemäss Fig. 11 ist der Werkstückaufnahme-Rahmen 6 auf dem Arbeitstisch 1 festgespannt. Der Zentrierzapfen 23 ist in den Zentrierschlitz 39 eingedrungen und hat dabei den zentralen Bereich 41 der Zentrierplatte 32 axial in Richtung auf den Querholm 11 hin verschoben. Die weniger geneigten Seitenbereiche 29 des Zentrierzapfens 23 liegen an den Kanten des Zentrierschlitzes 39 auf und bewirken so die Zentrierung des Werkstückaufnahme-Rahmens 6.

Bei auf den Arbeitstisch 1 gespanntem Rahmen 6 ist die X/Y-Referenzlage durch den Schnittpunkt der beiden Geraden durch die gegenüberliegenden Zentrierzapfen 23 des Tragkörpers 5 definiert, auf welchen das Zentrierorgan 15 aufgesetzt wird. An sich ist theoretisch auch die Winkellage des Zentrierorgans 15 und damit des Rahmens 6 bestimmt, aufgrund der vergleichsweise grossen Abmessungen des letzteren jedoch mit nicht ausreichender Genauigkeit; infolge der Elastizität des Rahmenmaterials könnte die Position der dem Zentrierorgan 15 diagonal gegenüberliegenden Ecke des Rahmens 6 unzulässig variieren. Deshalb wird durch das Zusammenwirken der beiden in X-Richtung liegenden Zentrierzapfen 23 des Tragkörpers 4 mit den beiden Zentrierschlitzen 39a des Zentrierorgans 16 zusätzlich die Y-Position des Zentrierorgans 16 festgelegt. Die restlichen beiden Zentrierzapfen 23 des Tragkörpers 4 haben dabei keine Funktion, da sie in die durchgehenden Bohrungen 42a der Zentrierplatte 32 des Zentrierorgans 16 eintauchen. In entsprechender Weise wird durch das Zusammenwirken der beiden in Y-Richtung liegenden Zentrierzapfen 23 des Tragkörpers 3 mit den beiden Zentrierschlitzen 39b des Zentrierorgans 17 zusätzlich die X-Position des Zentrierorgans 17 festgelegt. Die restlichen beiden Zentrierzapfen 23 des Tragkörpers 3 haben dabei keine Funktion, da sie in die durchgehenden Bohrungen 42a der Zentrierplatte 32 des Zentrierorgans 17 eintauchen. Die Zentrierzapfen 23 des Tragkörpers 2 schliesslich üben überhaupt keine Wirkung aus, da sie allesamt in die durchgehenden Bohrungen 42b des Zentrierorgans 18 eintauchen. Durch das Zusammenwirken des Tragkörpers 2 und des Zentrierorgans 18 wird lediglich die Z-Position festgelegt, indem die Distanzbolzen 37 auf den plangeschliffenen Oberflächenbereichen 27 des Tragkörpers 2 aufliegen.

Wenn der Rahmen 7 der Ausführung gemäss Fig. 2a auf den Arbeitstisch 1 gemäss Fig. 1 aufgesetzt wird, treten nur zwei der Tragkörper 2-5 in Funktion, je nach Grösse des Rahmens 7 und je nach gewünschter Ausrichtung die Tragkörper 2 und 3, die Tragkörper 2 und 4, die Tragkörper 4 und 5 oder die Tragkörper 3 und 5. Dabei wird durch den einen der beiden beanspruchten Tragkörper, und zwar durch denjenigen, der das Zentrierorgan 15 aufnimmt, die X/Y-Referenz gebildet sowie die Winkellage um die Z-Achse festgelegt, während der andere Tragkörper, auf den das Zentrierorgan 16 aufliegt, zusätzlich die X- oder Y-Position festlegt, je nach Ausrichtung des Rahmens 7. Durch die vergleichsweise geringeren Abmessungen des Rahmens 7 genügt dies in der Praxis.

Aus Gründen der Einfachheit und um die Möglichkeit zu schaffen, je nach Artdes verwendeten Werkstückaufnahme-Rahmens jeden beliebigen der Tragkörper 2-5 mit dem Zentrierorgan 15 zusammenwirken zu lassen, sind alle Tragkörper 2-5 identisch ausgebildet, obwohl nur bei einem der Tragkörper sämtliche vier Zentrierzapfen in Funktion treten.

Allfällige Abweichungen der Distanz zwischen den geometrischen Zentren zweier benachbarter Tragkörper und denjenigen zweier benachbarter Zentrierorgane, sei es durch thermische Expansion oder Kontraktion, sei es durch Bearbeitungstoleranzen, haben auf die Genauigkeit der Zentrierung keinen Einfluss. Die X/Y-Position der Z-Achse wird nur durch das Zusammenwirken eines einzigen Tragkörpers (z.B. 5 in Fig. 1) mit dem Zentrierorgan 15 festgelegt. Die Lage des Zentrierorgans 16 (Fig. 2) beispielsweise, das auf den Tragkörper 4 aufzuliegen kommt, kann in X-Richtung variieren, da die Zentrierschlitze 39a genügend lang und die Sackbohrungen 42 genügend gross sind, um Abweichungen aufzunehmen.

Im vorliegenden Ausführungsbeispiel werden lediglich die jeweils äusseren vier Zentrierzapfen 23 der Tragkörper 2-5 verwendet. Der Grund liegt darin, dass die Zentrierorgane des beispielsweise dargestellten Rahmens für relativ grosse Belastung und höchste Steife ausgelegt sind. Bei kleinerer Belastung und geringeren Abmessungen der Werkstückaufnahme können einfachere Zentrierorgane verwendet werden, die auch kleinere Abmessungen besitzen können. So kann zum Beispiel anstelle der in den Zeichnungen gezeigten Zentrierplatte eine einfache Federstahlscheibe Verwendung finden, die mit vier übers Kreuz angeordneten, rechteckigen Öffnungen versehen ist, in welche die inneren Zentrierzapfen 22 der Tragkörper 2-5 eingreifen. Natürlich muss dafür Sorge getragen werden, dass sich die Federstahlscheibe während des Aufspannens im Bereich der Öffnungen axial elastisch verformen kann, sei es durch beabstandete Anordnung der Federstahlscheibe auf dem Querholm, sei es durch Anbringen von Vertiefungen im Querholm, die im Bereich der Öffnungen der Federstahlscheibe liegen. Jedenfalls können dieselben Tragkörper 2-5 mit beiden Arten von Zentrierorganen verwendet werden.

Die erfindungsgemässe Vorrichtung bietet bei ausserordentlicher Flexibilität in der Gestaltung der Werkstückaufnahme eine sehr hohe Präzision bezüglich der Lagegenauigkeit. Sie ist einfach und kostengünstig herzustellen, unempfindlich gegen Verschmutzung, da das System Zentrierzapfen-Zentrierschlitz selbstreinigend ist, und verschleissunempfindlich. Sollten sich die Zentrierzapfen und/oder die Zentrierschlitze nach langem Gebrauch etwas abnutzen, wird lediglich die Zentrierplatte 32 mit ihrem zentralen Abschnitt 41 etwas weniger in Axialrichtung deformiert, was aber keinen Einfluss auf die Lagegenauigkeit hat.

## Patentansprüche

1. Vorrichtung zum positionsdefinierten Aufspannen eines Werkstücks auf einem Bearbeitungstisch (1) mit einer Werkstückaufnahme (6; 7), auf welcher das Werkstück lösbar befestigt wird und welche mit Zentrierschlitzen (39) versehen ist, die mit korrespondierend auf dem Bearbeitungstisch (1) angeordneten, über diesen vorstehenden Zentrierzapfen (22, 23) zusammenwirken, wobei eine erste Gruppe von vier Zentrierschlitzen (39) und vier Zentrierzapfen (22; 23) vorgesehen ist, die die Lage der Werkstückaufnahme (6; 7) in X- und Y-Richtung und damit die Referenz der Z-Achse im Zentrum der Zentrierschlitze (39) und Zentrierzapfen (22; 23) definiert und die Winkellage um die Z-Achse festlegt, und wobei mindestens eine im Abstand von der ersten Gruppe angeordnete, weitere Gruppe von zwei Zentrierschlitzen (39a; 39b) und Zentrierzapfen (22; 23) vorgesehen ist, die auf der Verbindungsgeraden durch das Zentrum der ersten Gruppe von Zentrierschlitzen (39) und durch das Zentrum der weiteren Gruppe von Zentrierschlitzen (39a, 39b) liegen und damit zusätzlich die Lage der Werkstückaufnahme (6; 7) nur bezüglich der Winkellage um die Z-Achse festlegen.

2. Vorrichtung nach Anspruch 1, dadurch gekennzeichnet, dass neben der ersten Gruppe von Zentrieröffnungen (39) und Zentrierzapfen (22; 23) als weitere Gruppen eine zweite, mit ihrem Zentrum auf der Y-Achse liegende Gruppe von Zentrieröffnungen (39b) und Zentrierzapfen (22; 23), die die Lage der Werkstückaufnahme (6; 7) nur in X-Richtung festlegt, sowie eine dritte, mit ihrem Zentrum auf der X-Achse liegende Gruppe von Zentrieröffnungen (39a) und Zentrierzapfen (22; 23) vorgesehen sind, die die Lage der Werkstückaufnahme (6; 7) nur in Y-Richtung festlegt.

3. Vorrichtung nach Anspruch 1 oder 2, dadurch gekennzeichnet, dass die Zentrierzapfen-Gruppen einen Tragkörper (2; 3; 4; 5) aufweisen, der mit mindestens vier keilartigen, gleichmässig beabstandet entlang eines Kreises angeordneten Zentrierzapfen (22; 23) versehen ist, wobei die freien Keilkanten (24) von zwei einander gegenüberliegenden Zentrierzapfen (22; 23) entlang einer ersten, in X-Richtung verlaufenden Linie und die freien Keilkanten (24) der zwei anderen einander gegenüberliegenden Zentrierzapfen (22; 23) entlang einer zweiten, in Y-Richtung verlaufenden Linie fluchten.

4. Vorrichtung nach Anspruch 1 oder 2, dadurch gekennzeichnet, dass die Zentrierzapfen-Gruppen einen Tragkörper (2; 3; 4; 5) aufweisen, der mit vier keilartigen, gleichmässig beabstandet entlang eines ersten, kleineren Kreises angeordneten Zentrierzapfen (22) und mit vier keilartigen, gleichmässig beabstandet entlang eines zweiten, grösseren, konzentrischen Kreises angeordneten Zentrierzapfen (23) versehen ist, wobei die freien Keilkanten (24) von vier einander gegenüberliegenden Zentrierzapfen (22; 23) entlang einer ersten, in X-Richtung verlaufenden Linie und die freien Keilkanten (24) der vier anderen einander gegenüberliegenden Zentrierzapfen (22; 23) entlang einer zweiten, in Y-Richtung verlaufenden Linie fluchten.

5. Vorrichtung nach Anspruch 3 oder 4, dadurch gekennzeichnet, dass die mit den Zentrierzapfen (22; 23) versehene Oberfläche der Tragkörper (2; 3; 4; 5) zumindest bereichsweise (27) plangeschliffen ist.

6. Vorrichtung nach Anspruch 3 oder 4, dadurch gekennzeichnet, dass die Tragkörper (2; 3; 4; 5) mit einer zentralen Aufnahmeöffnung (25) und mit an sich bekannten Haltemitteln (26) für einen Zugbolzen (36) versehen sind.

7. Vorrichtung nach einem der Ansprüche 3-6, dadurch gekennzeichnet, dass die Zentrierzapfen (22; 23) erste, weniger geneigte, der Tragkörperoberfläche zugewandte seitliche Oberflächenbereiche (29) und zweite, stärker geneigte, an die Keilkante (24) anschliessende seitliche Oberflächenbereiche (28) besitzen.

8. Vorrichtung nach einem der vorhergehenden Ansprüche, dadurch gekennzeichnet, dass die Werkstückaufnahme (6; 7) mit mindestens zwei im Abstand voneinander angeordneten Zentrierorganen (15, 16, 17, 18) versehen ist, welche je eine Zentrierplatte (32) aufweisen, wobei die Zentrierplatte (32) eines ersten Zentrierorgans (15) mit vier Zentrierschlitzen (39) versehen ist, deren Anordnung mit vier Zentrierzapfen (22; 23) eines Tragkörpers (2; 3; 4; 5) korrespondiert, und wobei die Zentrierplatte (32) mindestens eines weiteren Zentrierorgans (16; 17) mit zwei Zentrierschlitzen (39) versehen ist.

9. Vorrichtung nach Anspruch 8, dadurch gekennzeichnet, dass die Werkzeugaufnahme die Gestalt eines rechteckigen Rahmens (6) besitzt, in dessen vier Ecken je ein Zentrierorgan (15, 16, 17, 18) angeordnet ist.

10. Vorrichtung nach Anspruch 9, dadurch gekennzeichnet, dass der Rahmen (6) mit einem ersten Zentrierorgan (15) mit vier Zentrierschlitzen (39), in den beiden benachbarten Ecken mit je einem weiteren Zentrierorgan (16, 17) mit zwei Zentrierschlitzen (39a, 39b) und in der gegenüberliegenden Ecke mit einem Zentrierorgan (18) ohne Zentrierschlitze versehen ist.

11. Vorrichtung nach einem der Ansprüche 8-10, dadurch gekennzeichnet, dass die Zentrierplatten (32) aller Zentrierorgane (15,16,17,18) mittels je vier Distanzbolzen (37) an der Werkzeugaufnahme (6, 7) befestigt sind.

12. Vorrichtung nach einem der Ansprüche 8-11, dadurch gekennzeichnet, dass die Zentrierplatten (32) der Zentrierorgane (16, 17, 18) mit zwei (39a, 39b) bzw. keinen Zentrierschlitzen mit durchgehenden Bohrungen (42a, 42b) versehen sind, durch welche die Zentrierzapfen (23) durchtreten, wenn die Zentrierorgane (16, 17, 18) auf den zugeordneten Tragkörpern (2, 3, 4) aufliegen.

13. Vorrichtung nach einem der Ansprüche 8-11, dadurch gekennzeichnet, dass die Zentrierplatte (32) des ersten Zentrierorgans (15) vier im Bereich der Distanzbolzen (37) liegende, verdickte Bereiche (38) und vier jeweils in der Mitte zwischen zwei benachbarten verdickten Bereichen (38) liegende zentrale Abschnitte (41) aufweist, welche über dünne, federelastische Stege 40 mit den verdickten Bereichen (38) verbunden und mit Zentrierschlitzen (39) versehen sind.

14. Vorrichtung nach einem der Ansprüche 8-11, dadurch gekennzeichnet, dass die Zentrierplatten (32) des zweiten und dritten Zentrierorgans (16, 17) zwei einander gegenüberliegende, sich zwischen zwei benachbarten Distanzbolzen (37) erstreckende, verdickte Bereiche (38) und zwei jeweils in der Mitte zwischen den beiden verdickten Bereichen (38) liegende zentrale Abschnitte (41) aufweist, welche über dünne, federelastische Stege 40 mit den verdickten Bereichen (38) verbunden und mit Zentrierschlitzen (39a, 39b) versehen sind.

15. Vorrichtung nach Anspruch 13 oder 14, dadurch gekennzeichnet, dass die zentralen Abschnitte (41) etwas dünner als die verdickten Bereiche (38) und gegenüber der Oberfläche der verdickten Bereiche (38), die der Werkstückaufnahme (11) zugewandt ist, zurückversetzt sind, so dass die zentralen Abschnitte (41) gegen die Werkstückaufnahme (11) hin elastisch einfedern können.

16. Vorrichtung nach einem der Ansprüche 8-15, dadurch gekennzeichnet, dass die Zentrierorgane (15, 16, 17, 18) mit je einem an sich bekannten, zentralen, abstehenden Zugbolzen (36) versehen sind.

## Claims

1. Device for the specifically positioned clamping of a workpiece on a machining table (1) with a workpiece fixture (6; 7), on which the workpiece is fastened releasably and which is provided with centring slots (39) which cooperate with centring pins (22, 23) arranged correspondingly on the machining table (1) and projecting above the latter, there being provided a first group of four centring slots (39) and four centring pins (22; 23) which defines the position of the workpiece fixture (6; 7) in the X- and Y-direction and consequently the reference of the Z-axis in the centre of the centring slots (39) and centring pins (22; 23) and fixes the angular position about the Z-axis, and there being provided at least one further group of two centring slots (39a; 39b) and centring pins (22; 23) which is arranged at a distance from the first group and which lies on the connecting line through the centre of the first group of centring slots (39) and through the centre of the further group of centring slots (39a, 39b) and thus additionally fixes the position of the workpiece fixture (6; 7) only in respect of the angular position about the Z-axis.

2. Device according to Claim 1, characterized in that, in addition to the first group of centring orifices (39) and centring pins (22; 23), there are provided as further groups a second group of centring orifices (39b) and centring pins (22; 23) which is located with its centre on the Y-axis and which fixes the position of the workpiece fixture (6; 7) in the X-direction only, and a third group of centring orifices (39a) and centring pins (22; 23) which is located with its centre on the X-axis and which fixes the position of the workpiece fixture (6; 7) in the Y-direction only.

3. Device according to Claim 1 or 2, characterized in that the groups of centring pins have a supporting body (2; 3; 4; 5) which is provided with at least four wedge-like centring pins (22; 23) arranged uniformly spaced along a circle, the free wedge edges (24) of two mutually opposite centring pins (22; 23) being aligned along a first line running in the X-direction, and the free wedge edges (24) of the other two mutually opposite centring pins (22; 23) being aligned along a second line running in the Y-direction.

4. Device according to Claim 1 or 2, characterized in that the groups of centring pins have a supporting body (2; 3; 4; 5) which is provided with four wedge-like centring pins (22) arranged uniformly spaced along a first smaller circle and with four wedge-like centring pins (23) arranged uniformly spaced along a second larger concentric circle, the free wedge edges (24) of four mutually opposite centring pins (22; 23) being aligned along a first line running in the X-direction, and the free wedge edges (24) of the other four mutually opposite centring pins (22; 23) being aligned along a second line running in the Y-direction.

5. Device according to Claim 3 or 4, characterized in that the surface of the supporting bodies (2; 3; 4; 5) which is provided with the centring pins (22; 23) is surface-ground at least in regions (27).

6. Device according to Claim 3 or 4, characterized in that the supporting bodies (2; 3; 4; 5) are provided with a central receiving orifice (25) and with holding means (26) known per se for a tie bolt (36).

7. Device according to one of Claims 3 to 6, characterized in that the centring pins (22; 23) possess first lateral surface regions (29) of lower inclination confronting the supporting-body surface and second lateral surface regions (28) of higher inclination adjoining the wedge edge (24).

8. Device according to one of the preceding claims, characterized in that the workpiece fixture (6; 7) is provided with at least two centring members (15, 16, 17, 18) which are arranged at a distance from one another and which each have a centring plate (32), the centring plate (32) of a first centring member (15) being provided with four centring slots (39), the arrangement of which corresponds to four centring pins (22; 23) of a supporting body (2; 3; 4; 5), and the centring plate (32) of at least one further centring member (16; 17) being provided with two centring slots (39).

9. Device according to Claim 8, characterized in that the tool fixture has the form of a rectangular frame (6), in each of the four corners of which a centring member (15, 16, 17, 18) is arranged.

10. Device according to Claim 9, characterized in that the frame (6), with a first centring member (15) having four centring slots (39), is provided in each of the two adjacent corners with a further centring member (16, 17) having two centring slots (39a, 39b) and is provided in the opposite corner with a centring member (18) without centring slots.

11. Device according to one of Claims 8 to 10, characterized in that the centring plates (32) of all the centring members (15, 16, 17, 18) are each fastened to the tool fixture (6, 7) by means of four spacer bolts (37).

12. Device according to one of Claims 8 to 11, characterized in that the centring plates (32) of the centring members (16, 17, 18) are provided with two (39a, 39b), or no, centring slots having continuous bores (42a, 42b) through which the centring pins (23) pass when the centring members (16, 17, 18) rest on the associated supporting bodies (2, 3, 4).

13. Device according to one of Claims 8 to 11, characterized in that the centring plate (32) of the first centring member (15) has four thickened regions (38) located in the region of the spacer bolts (37) and four central portions (41) which are located respectively in the middle between two adjacent thickened regions (38) and which are connected to the thickened regions (38) via thin resiliently elastic webs (40) and are provided with centring slots (39).

14. Device according to one of Claims 8 to 11, characterized in that the centring plates (32) of the second and third centring member (16, 17) has two mutually opposite thickened regions (38) extending between two adjacent spacer bolts (37), and two central portions (41) which are located respectively in the middle between the two thickened regions (38) and which are connected to the thickened regions (38) via thin resiliently elastic webs (40) and are provided with centring slots (39a, 39b).

15. Device according to Claim 13 or 14, characterized in that the central portions (41) are somewhat thinner than the thickened regions (38) and are set back relative to the surface of the thickened regions (38) which confronts the workpiece fixture (11), so that the central portions (41) can spring elastically towards the workpiece fixture (11).

16. Device according to one of Claims 8 to 15, characterized in that the centring members (15, 16, 17, 18) are each provided with a central projecting tie bolt (36) known per se.

## Revendications

1. Dispositif d'ablocage indexé d'une pièce sur une table d'usinage (1), comportant un dispositif (6 ; 7) de fixation de pièce sur lequel la pièce est fixée d'une manière amovible et qui est pourvu d'orifices de centrage (39) coopérant avec des plots de centrage (22, 23) qui sont disposés d'une manière correspondante sur la table d'usinage (1) et qui se dressent sur cette dernière, un premier groupe de quatre orifices de centrage (39) et de quatre plots de centrage (22, 23) étant prévu pour déterminer la position du dispositif (6 ; 7) de fixation de pièce dans la direction X et dans la direction Y, et donc la référence de l'axe Z, au centre de l'orifice de centrage (39) et du plot de centrage (22 ; 23), et pour déterminer la position angulaire autour de l'axe Z, tandis qu'il est prévu, disposé à distance du premier groupe, au moins un autre groupe de deux orifices de centrage (39a ; 39b) et plots de centrage (22 ; 23) qui sont situés sur la droite de jonction passant par le centre du premier groupe d'orifices de centrage (39) et par le centre de l'autre groupe d'orifices de centrage (39a ; 39b) et déterminent ainsi en outre la position du dispositif de fixation de pièce (6 ; 7) uniquement en relation avec la position angulaire autour de l'axe Z.

2. Dispositif suivant la revendication 1, caractérisé en ce qu'en outre le premier groupe d'orifices de centrage (39) et de plots de centrage (23 ; 23), il est prévu, comme autres groupes, un deuxième groupe d'orifices de centrage (39b) et de plots de centrage (22 ; 23), dont le centre est situé sur l'axe Y et qui ne détermine la position du dispositif (6 ; 7) de fixation de pièce que dans la direction X ; et un troisième groupe d'orifices de centrage (39a) et de plots de centrage (22 ; 23) dont le centre est situé sur l'axe X et qui ne détermine la position du dispositif (6 ; 7) de fixation de pièce que dans la direction Y.

3. Dispositif suivant l'une des revendications 1 et 2, caractérisé en ce que les groupes de plots de centrage comprennent un corps de support (2 ; 3 ; 4 ; 5) qui est pourvu d'au moins quatre plots de centrage (22 ; 23) en forme de coin et disposés d'une manière uniformément espacée le long d'un cercle, les arêtes libres (24) des coins formés par deux plots de centrage (22 ; 23) se faisant face étant situées suivant l'alignement d'une première ligne s'étendant dans la direction X et les arêtes libres (24) des coins formés par les deux autres plots de centrage (22 ; 23) se faisant face étant disposées dans l'alignement d'une seconde ligne s'étendant dans la direction Y.

4. Dispositif suivant l'une des revendications 1 et 2, caractérisé en ce que les groupes de plots de centrage comprennent un corps de support (2 ; 3 ; 4 ; 5) qui est pourvu de quatre plots de centrage (22), en forme de coin et disposés d'une manière uniformément espacée le long d'un premier cercle, plus petit, et quatre plots de centrage (23) en forme de coin et disposés d'une manière uniformément espacée le long d'un second cercle, plus grand et concentrique, les arêtes libres (24) des coins formant quatre plots de centrage (22 ; 23) se faisant face étant situées dans l'alignement d'une première ligne s'étendant dans la direction X, tandis que les arêtes libres (24) des coins formant les quatre autres plots de centrage (22 ; 23) se faisant face sont situées dans l'alignement d'une seconde ligne s'étendant dans la direction Y.

5. Dispositif suivant l'une des revendications 3 et 4, caractérisé en ce que la surface des corps de support (2 ; 3; 4 ; 5) qui est pourvue des plots de centrage (22 ; 23) est, au moins par zones (27), rectifiée suivant une surface plane.

6. Dispositif suivant l'une des revendications 3 et 4, caractérisé en ce que les corps de support (2 ; 3 ; 4 ; 5) sont pourvus d'un orifice central (25) de fixation de pièce et de moyens (26), en soi connus, de maintien d'une broche de traction (36).

7. Dispositif suivant l'une des revendications 3 à 6, caractérisé en ce que les plots de centrage (22 ; 23) comprennent des premières zones superficielles latérales (29), disposées du côté de la surface du corps de support et ayant une plus faible inclinaison, et des secondes zones superficielles latérales (28) ayant une plus grande inclinaison et se raccordant aux arêtes (24) du coin.

8. Dispositif suivant l'une des revendications précédentes, caractérisé en ce que le dispositif (6 ; 7) de fixation de pièce est pourvu d'au moins deux organes de centrage (15, 16, 17, 18) qui sont disposés à distance l'un de l'autre et qui comprennent chacun une plaque de centrage (32), la plaque de centrage (32) d'un premier organe de centrage (15) étant pourvue de quatre fentes de centrage (39) dont l'agencement correspond à quatre plots de centrage (22 ; 23) d'un corps de support (2 ; 3 ; 4 ; 5), tandis que la plaque de centrage (32) d'au moins un autre organe de centrage (16 ; 17) est pourvue de deux fentes de centrage (39).

9. Dispositif suivant la revendication 8, caractérisé en ce que le dispositif de fixation de pièce à la forme d'un cadre rectangulaire (6) à chacun des quatre coins duquel est disposé un organe de centrage (15, 16, 17, 18).

10. Dispositif suivant la revendication 9, caractérisé en ce que le cadre (6) est pourvu d'un premier organe de centrage (15) comportant quatre fentes de centrage (39), d'un autre organe de centrage (16, 17) comportant deux fentes de centrage (39a, 39b), dans chacun des deux coins voisins, et d'un organe de centrage (18) sans fente de centrage, dans le coin opposé.

11. Dispositif suivant l'une des revendications 8 à 10, caractérisé en ce que les plaques de centrage (32) de tous les organes de centrage (15, 16, 17, 18) sont fixées sur le dispositif (6, 7) de fixation de pièce chacune au moyen de quatre doigt-entretoises (37).

12. Dispositif suivant l'une des revendications 8 à 11, caractérisé en ce que les plaques de centrage (32) des organes de centrage (16, 17, 18) comportant deux fentes de centrage (39a, 39b) ou ne comportant pas de fente de centrage sont pourvues de trous traversants (42a, 42b) que les plots de centrage (23) traversent lorsque les organes de centrage (16, 17, 18) sont mis en place sur les corps de support (2, 3, 4) associés.

13. Dispositif suivant l'une des revendications 8 à 11, caractérisé en ce que la plaque de centrage (32) du premier organe de centrage (15) comporte quatre zones (38), situées au voisinage des doigts-entretoises (37) et ayant une plus grande épaisseur, et quatre sections centrales (41) qui sont situées chacune au milieu entre deux zones (38) de plus grande épaisseur voisines et sont reliées aux zones (38) de plus grande épaisseur par des voiles (40) minces ayant une élasticité analogue à celle des ressorts et qui sont pourvues de fentes de centrage (39).

14. Dispositif suivant l'une des revendications 8 à 11, caractérisé en ce que les plaques de centrage (32) du deuxième et du troisième organes de centrage (16, 17) comprennent chacune deux zones (38) se faisant face, s'étendant entre deux doigts-entretoises (37) voisins et ayant une plus grande épaisseur, et deux sections centrales (41) sont situées chacune au milieu entre les deux zones (38) de plus grande épaisseur et qui sont reliées aux zones (38) de plus grande épaisseur par des voiles (40) minces ayant une élasticité analogue à celle des ressorts et qui sont pourvues de fentes de centrage (39a, 39b).

15. Dispositif suivant l'une des revendications 13 et 14, caractérisé en ce que les sections centrales (41) sont légèrement plus minces que les zones (38) ayant une plus grande épaisseur et sont situées en retrait vis-à-vis de la surface des zones (38) de plus grande épaisseur qui est tournée vers le dispositif (11) de fixation de pièce, de sorte que les sections centrages (41) peuvent jouer élastiquement vers le dispositif (11) de fixation de pièce.

16. Dispositif suivant l'une des revendications 8 à 15, caractérisé en ce que les organes de centrage (15, 16, 17, 18) sont pourvus chacun d'une broche centrale de traction (36) se dressant sur l'organe associé et en soi connue.
